# EUROPEAN PATENT SPECIFICATION

(11) **EP 2 943 099 B1**
(45) Date of publication and mention of the grant of the patent: **26.10.2016**
(21) Application number: 14701301.5
(22) Date of filing: 09.01.2014
(51) Int. Cl.: A47J 31/06, B65D 85/804

(54) **FILTER UNIT FOR A CAPSULE AND CAPSULE COMPRISING SUCH FILTER UNIT**
FILTEREINHEIT FÜR EINE KAPSEL UND KAPSEL MIT DIESER FILTEREINHEIT
UNITÉ DE FILTRE POUR CAPSULE ET CAPSULE COMPRENANT UNE TELLE UNITÉ DE FILTRE

(30) Priority: 14.01.2013 EP 13151119
(43) Date of publication of application: 18.11.2015
(73) Proprietor: Nestec S.A., 1800 Vevey (CH)
(72) Inventor: KOHLI, Hans-Markus, CH-1442 Montagny-près-Yverdon (CH); ABRAHAM, Sophie, F-25160 Remoray (FR); WYSS, Heinz, CH-3672 Oberdiessbach (CH); FABOZZI, Thierry, Jean, Robert, CH-1201 Geneve (CH); BEZET, Nicolas Jean-Guy, F-71000 Macon (FR)
(74) Representative: Borne, Patrice Daniel
(86) International application number: PCT/EP2014/050260
(87) International publication number: WO 2014/108451

(56) References cited:
- WO-A1-2010/128028
- WO-A1-2010/128031
- WO-A1-2010/128051

## Description

The present invention is directed to a filter unit for a capsule for preparing a beverage and/or nutritional product. In particular, the filter unit is configured to filter a liquid that is injected into the capsule, and to deliver the filtered liquid to a separate compartment of the capsule, which holds beverage and/or nutritional products.

From the prior art a filter unit is known, which is placed inside a capsule, in order to remove contaminants from liquid injected into the capsule before the injected liquid interacts with beverage and/or nutritional ingredients. The filter unit can be designed for allowing also injection of compressed air into a compartment holding said ingredients, so that the capsule can be properly emptied after use.

Typically, the filter unit of the prior art has an upper casing and a lower casing, the two casings being assembled together. An interface between the assembled upper and lower casings can be sealed, for example ultrasonically. The filter unit further comprises a filter membrane that is connected by pinching between the upper and lower casing and/or by sealing.

For example, WO 2010/128028 A1 discloses a capsule for the preparation of a nutritional product for use in a device that is adapted to supply a liquid to the capsule. The capsule comprises a filter unit for removing contaminants contained in the injected liquid. The filter unit comprises a protective casing and at least one filter medium, in particular a filter membrane. After passing through the filter unit, the liquid is delivered to at least one compartment containing beverage ingredients. The capsule further comprises a selectively openable gas inlet, which is placed on or in the capsule to allow gas introduction from the outside into the ingredients compartment without passing through the filter unit.

WO 2010/128031 A1 discloses a capsule for the preparation of a nutritional product for use in a device that is adapted to inject a liquid to the capsule. The capsule comprises a compartment, which houses a filter unit for removing contaminants contained in the injected liquid. The filter unit comprises a microporous membrane inserted into a pressure resistant casing. The capsule further comprises a compartment for beverage ingredients. The filter unit has a filtering surface, which is smaller than the cross-section of the mouth of the ingredient compartment.

WO 2010/128051 A1 discloses a capsule for the preparation of a nutritional product in a device that is adapted to supply a liquid into the capsule. The capsule comprises a filter unit, which comprises a casing comprising a filter membrane and an outlet wall for supporting the filter membrane. The outlet wall of the filter unit comprises at least one liquid outlet, which communicates with a compartment of the capsule, in which beverage ingredients are contained.

As further prior art, WO 2009/092629 A1 discloses a capsule for use in a beverage production device, wherein the capsule is provided with an antimicrobial filter. The antimicrobial filter comprises a porous membrane.

WO 2010/112353 A1 discloses a capsule for use in a beverage production device. The capsule comprises a filter for filtering a liquid injected into the capsule, a collection member placed downstream of the filter to collect the filtered liquid, and at least one restriction orifice in the collection member to focus the flow of the liquid in at least one jet of liquid at high velocity into a compartment of the capsule, in which beverage ingredients are contained.

The interface connection between the upper casing and the lower casing needs to be absolutely tight and of sufficient tear strength, in order to resist the injection of liquid into the filter unit under relatively high pressure (several bars of pressure). Several sealing lines at the interface of such filter units are also individually formed at a filter portion and at a liquid injection portion of the filter unit, thereby providing higher risks of a defective seal. Therefore, in order to ensure the production of a safe product, drastic quality controls need to be implemented during and after the welding process and corrective adjustments of the process parameters need to be constantly implemented as well. These controls and constant corrective adjustments impact on the line performance and increase the production costs.

Further, the assembling of the filter units known from the state of the art is time consuming and requires a large number of manufacturing steps.

Another disadvantage of the state of the art filter units is that the shape is often limited (i.e. rounded) for facilitating the welding process. However, this shape is not optimal for reducing the amount of the used materials, in particular the materials for filter membranes.

The object of the present invention is to improve the state of the art by addressing the above-mentioned disadvantages. In particular, an object of the present invention is to provide a filter unit, for which the tightness, in particular the tightness to fluids under pressure, is improved and is made more reliable. Another object of the present invention is to provide a filter unit, which can be manufactured easier, at higher production speed and at lower costs.

The above-mentioned objects are solved by a filter unit, a capsule and a manufacturing method according to the attached independent claims. The attached dependent claims develop further advantages of the invention.

The present invention is directed to a filter unit for a capsule for preparing a beverage and/or nutritional product, the filter unit comprising an upper casing comprising a liquid inlet, a lower casing comprising a liquid outlet, a filter provided between the upper casing and the lower casing, and a liquid delivery portion for delivering a liquid received from the liquid outlet, wherein an interface of the upper casing and the lower casing is sealed with an over-moulded ring.

The over-moulded ring ensures that the connection of the upper casing to the lower casing, i.e. an interface between the two casings, is tight and pressure resistant. The connection is in particular tight to liquid, even when liquid is injected into the filter unit under high pressure. The over-moulded ring largely reduces the likelihood of defects at the sealed interface. Furthermore, this solution also enables to organize the assembling of the filter unit in a more effective manner, in particular, by the use of a rotary cube-injection technology for which the injection of the components, their assembly and the over-moulding operation can be operated together in the same unit. As a result, the same cycle times and automation can be drastically improved over traditional assembly using (ultrasonic) welding.

The liquid delivery portion of the filter unit can deliver the filtered liquid e.g. to a compartment of a capsule containing beverage and/or nutritional ingredients. In this case the filter unit is suited to separate a position of the liquid injection into the capsule, e.g. by injector means of a beverage preparation machine, from the position of the beverage ingredients inside the capsule. The injector means do not come into contact with the ingredients. Thereby, the risk of contaminating the ingredients inside the capsule is largely reduced, and the hygiene of the produced beverage is improved.

Preferably, at least a part of the liquid delivery portion is formed integrally with the lower casing.

The manufacturing and in particular the assembling of the filter unit can thus be simplified and be made faster. A part of the liquid delivery portion can also be formed integrally with the upper casing, and connect to the part formed integrally with the lower casing, when the two casings are assembled.

Preferably, the filter comprises a filter membrane, and the over-moulded ring seals the filter membrane to the upper casing and/or lower casing in a manner to prevent a bypass of liquid. The filter unit is thus suitable for filtering liquid even at high injection pressures. The sealing of the filter membrane to the casing by the over-moulded ring ensures that all liquid injected into the capsule and delivered in the ingredient compartment is filtered.

Preferably, the over-moulded ring contacts (i.e., seals) a continuous annular portion of the filter membrane. Thereby, the tightness of the filter unit is made more reliable.

Preferably, the filter comprises a nano- or micro-porous membrane. Such a membrane, which has nano-pores or micro-pores, enables the removal of contaminants from the injected liquid.

The "contaminant" refers to microorganisms such as: bacteria, viruses, but may also encompass under certain circumstances: organic chemicals such as: acrylamide, benzene, carbofuran; inorganic chemicals such as: arsenic, cadmium, cyanide, fluoride, mercury, nitrate, nitrite; disinfectants such as: chloramines, chlorine, chlorine dioxide; disinfection byproducts such as: bromate, chlorite, haloacetic acids (HAA5), trihalomethanes (TTHMs); metals such as: zinc, silver, lead; radionuclides; organic or inorganic macro-elements such as: sand, hair or dirt; abnormal pH; and undesired odor.

In a preferred mode, the filter membrane has a pore size of less than 0.4 microns, most preferably of less than 0.2 microns. It may have a thickness of less than 500 microns, preferably between 10 and 300 microns. The material of the membrane can be chosen from the list consisting of PES (polyethersulfone), cellulose acetate, cellulose nitrate, polyamide and combinations thereof.

Preferably, the filter comprises a support grid for the filter membrane. The support grid ensures that the filter membrane is not damaged during use, even when liquid is injected under high pressures into the filter unit.

Preferably, the support grid is clipped into the lower casing. This enables to easily and quickly provide a lower sub-assembly before over-moulding operation.

Preferably, the upper casing, the lower casing and the filter form a filter portion, and the over-moulded ring forms an integral piece that seals both the filter portion and the liquid delivery portion. Preferably, the over-moulded ring forms two closed loops for individually sealing the filter portion and the liquid delivery portion, respectively, the two closed loops being integrally linked. Therefore, the integral over-moulded ring ensures a connection of the different key portions of the casing all at once that simplifies the manufacturing of the filter unit.

The liquid delivery portion is preferably arranged side-by-side with the filter portion. When the filter unit is inserted into a capsule, the liquid delivery portion can thus deliver the liquid filtered by the filter portion to an ingredient compartment of the capsule. The two closed loops ensure an optimal sealing of all portions of the filter unit.

Preferably, the over-moulded ring covers the outer surface of the filter portion at least from an upper surface of the upper casing to a part on the lower casing below the interface.

Preferably, the upper casing and the lower casing are provided with connection means for clipping the two casings together. The connection means allow a simple attachment of the upper casing to the lower casing. Simple clipping is sufficient, since the initial connection of the upper casing to the lower casing (i.e., before over-moulding) does not need to be tight. The tightness is provided by the over-moulded ring.

Preferably, the filter unit further comprises an air inlet that is separate from the liquid inlet and is preferably formed integrally with the upper casing. The air inlet preferably communicates by a conduit directly with the liquid delivery portion without passing through the filter.

Through the air inlet, pressurized air can be injected into a capsule, in which the filter unit is installed. The injected air bypasses the filter membrane due to the direct communication of the air inlet with the delivery portion. The injected air ensures that the capsule is emptied completely of liquid after use, i.e. after the beverage has been produced by the interaction of liquid and ingredients.

Preferably, the upper casing and/or the lower casing have a rectangular or square seat for lodging a filter having a complementary shape. Consequently, the filter membrane can be of square or rectangular shape, which is an optimal shape for material saving.

The present invention is further directed to a capsule for preparing a beverage and/or nutritional product, the capsule comprising a filter unit according to the description above.

The capsule employs all the above-described advantages of the filter unit. The capsule can in particular be used for hygiene sensitive beverage and/or nutritional ingredients such as infant formula, because the contaminants can be removed from the liquid provided in the capsule before mixing with the ingredients and because the ingredient compartment is maintained separated from the liquid injection site by the filter unit thus preventing any risk of contamination by the external injection means of the beverage and/or nutritional production device.

Preferably, the capsule comprises a compartment containing beverage and/or nutritional ingredients, and a dedicated seat for receiving the filter unit such that the liquid delivery portion is arranged for delivering a liquid into the compartment.

The liquid delivery portion thus acts as a means which is internal to the capsule for injecting liquid into the compartment containing the ingredients. The liquid delivery portion can be designed with a specific outlet or nozzle such that the liquid is injected into the ingredient compartment as one or more liquid jets or as a spray of liquid. The liquid delivery portion can be designed differently for different ingredients to be filled in a capsule. In particular, the liquid delivery portion can be designed for each type of ingredients for achieving the optimal dissolution of the ingredients.

The present invention is further directed to a manufacturing method for a filter unit for a capsule for preparing a beverage and/or nutritional product, the method comprising the steps of
- assembling an upper casing and a lower casing with a filter inserted between the casings;
- over-moulding a sealing ring to seal the interface between the upper casing and the lower casing.

The method further comprises providing a filter membrane and sealing the filter membrane to the upper casing and/or lower casing by the over-moulded sealing ring so that the bypass of the filter by liquid is prevented.

The method further comprises maintaining the filter membrane by vacuum in the upper casing or lower casing during assembly.

The manufacturing method is simpler and faster than methods for manufacturing comparable filter units of the state of the art. Further, the manufacturing method can be carried out at lower costs.

In the following the present invention will be described in more detail with reference to the attached drawings.
Figure 1 shows an exploded view of a filter unit according to the present invention.
Figure 2 shows an upper casing of a filter unit according to the present invention.
Figure 3 shows a lower casing of a filter unit according to the present invention.
Figure 4 shows the assembly of a filter unit according to the present invention.
Figure 5 shows a perspective view of a filter unit according to the present invention.
Figure 6 shows a cross section view through the filter unit according to the present invention.
Figure 7 shows an enlarged cross section view of a filter unit in a capsule according to the present invention.
Figure 8 shows two exploded views of a capsule with a filter unit according to the present invention.
Figure 9 shows respective views of a sealed capsule with the filter unit inside according to the present invention.

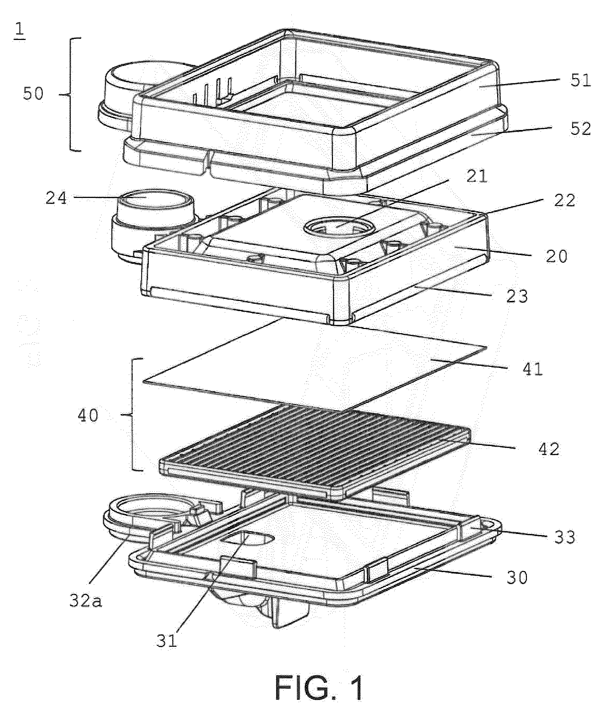

In figure 1 the parts of the filter unit 1 of the present invention are shown in an exploded view, i.e. before assembly of the filter unit 1. The filter unit 1 comprises an upper casing 20 and a lower casing 30. The upper casing 20 can be assembled with the lower casing 30, i.e. can be attached to the lower casing 30. In between the two casings 20 and 30 a filter 40 is included. The upper casing 20, the lower casing 30 and the filter 40 form a filter portion of the filter unit 1. The filter portion has a general transversal cross section or shape of a square or rectangle in the illustrated preferred mode.

The upper casing 20 has a liquid inlet 21, and the lower casing 30 has a liquid outlet 31, so that a liquid injected into the filter unit 1 can flow from the liquid inlet 21, through the filter 40, and to the liquid outlet 31. The filter 40 is designed to filter contaminants from the injected liquid. Preferably, the filtering function is provided by a filter membrane 41, which is more preferably a nano- or micro-porous membrane. However, other filter media are also possible. Preferably, the upper casing 20 and the lower casing 30 are made of a plastic material.

The filter unit 1 is further provided with a liquid delivery portion 32, which is adapted to receive the filtered liquid that exits the liquid outlet 31. The liquid delivery portion 32 is adapted to deliver the filtered liquid away from the filter unit 1. For example, the filtered liquid can be delivered into an ingredient compartment of a capsule, into which the filter unit 1 is installed.

The filter unit 1 finally comprises an over-moulded sealing ring 50, which is provided to an interface or junction line 25 formed between the assembled upper casing 20 and lower casing 30. The interface 25 is formed by the contacting surfaces of the two casings 20 and 30 when connected to each other. The over-moulded ring 50 is adapted to seal the interface along its complete circumference in a way that no liquid can exit from or enter into the inside of the filter unit 1. The over-moulded ring 50 thus completely surrounds the filter portion. The over-moulded ring 50 is preferably produced by over-moulding the casings 20, 30 with a mouldable, liquid-tight and pressure-resistant material such as a thermoplastic elastomer or resin material (such as polypropylene).

The liquid delivery portion 32 is preferably formed by the assembly of the lower casing 30 and upper casing 20. A lower part of the delivery portion 32 is formed by the lower casing 30. An upper part of the liquid delivery portion 32 is formed by the upper casing 20. As for example shown in figure 1, the liquid delivery portion 32 extends from below the filter portion to a side adjacent the filter portion thus enabling to position the filter unit in an off-centered manner in the capsule. In figure 1 the upper casing 20 is integrally formed with an air inlet 24, which connects to the liquid outlet part 32a of the liquid delivery portion 32, when the two casings 20 and 30 are assembled.

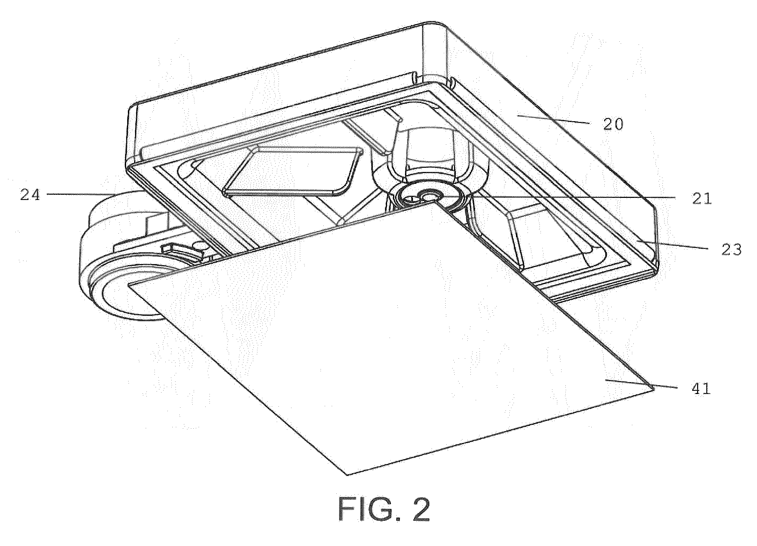

Figure 2 shows the upper casing 20 and the filter membrane 41 of the filter 40. Preferably the upper casing 20 has a rectangular or square shape seat for receiving and lodging the filter membrane 41. The filter membrane 41 has preferably a complementary rectangular or square shape. During assembly of the filter unit 1, the filter membrane 41 is held in the upper casing 30 by vacuum. The vacuum can for example be drawn through the liquid inlet 21.

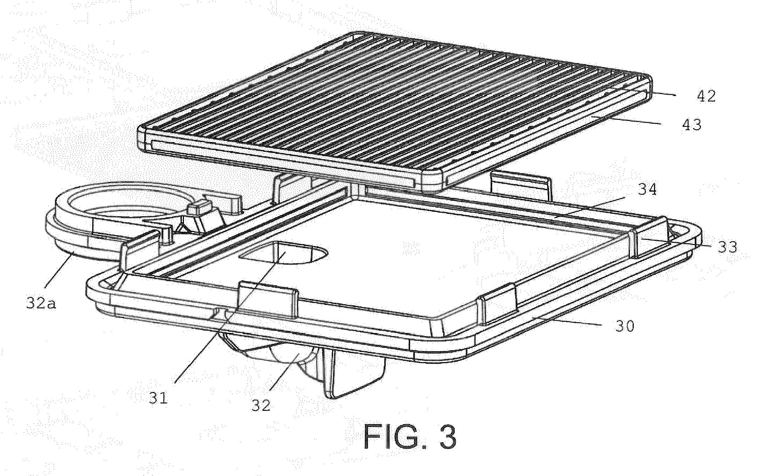

Figure 3 shows the lower casing 30 and a support grid 42 for the filter membrane 41, which is part of the filter 40. Preferably, the lower casing 30 comprises a square or rectangular shaped seat for receiving the support grid 42. The support grid 42 preferably has a complementary rectangular or square shape. The support grid is preferably made of a plastic material or a metal material, e.g. aluminum. The support grid 42 is preferably attached to the lower casing 30 by clipping or clamping. Therefore, the support grid 42 is provided with clipping means 43, which are preferably provided on its peripheral or side surface. The clipping means 43 can, for example, be designed in the form of at least one ridge 43 that is provided continuously or discontinuously around the side surface of the support grid 42. The lower casing 30 is provided with corresponding clipping means 34, for example, designed in the form of at least one groove 34, which is adapted to receive the ridges 43 formed on the support grid 42. Thus, the support grid 42 can be easily clipped into the seat of the lower casing 30, namely by pressing onto the support grid 42 until the at least one ridge 43 snaps into the at least one groove 34.

In figure 3 can further be seen that liquid, which exits from the liquid outlet 31 of the filter portion, enters the liquid delivery portion 32. The liquid delivery portion 32 is adapted to transfer the liquid to a liquid outlet structure 32a, which is preferably arranged side-by-side with the lower casing 30. Side-by-side means in this case that the liquid outlet structure 32a is arranged substantially in plane with the lower casing 30, said plane being preferably parallel to the surface of the filter 40.

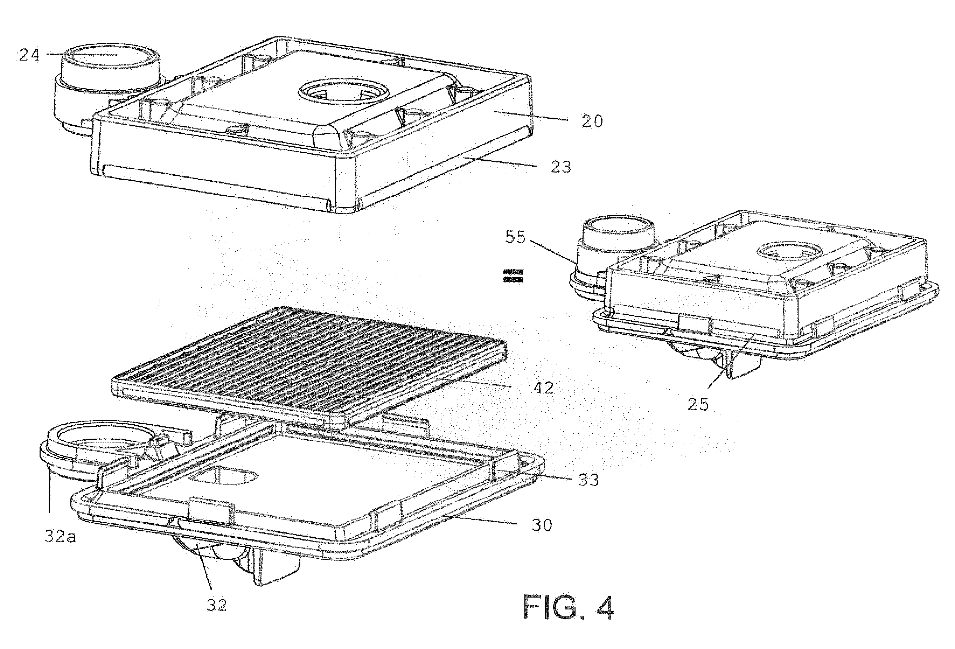

Figure 4 shows how the upper casing 20, in which the filter membrane 41 is held by vacuum, is assembled with the lower casing 30, which contains the support grid 42. The upper and lower casings 20 and 30 are preferably provided with connection means 23 and 33, respectively, for clipping the two casings 20 and 30 together. Preferably, the connection means 23 on the upper casing 20 are designed as ridges 23, which are provided on the side surface of the upper casing 20. The connection means 33 of the lower casing 30 are preferably designed as hooks 33, which are provided on the outer periphery of the lower casing 30. The connection means 23 and 33 are designed such that when the lower casing 30 and the upper casing 20 are pressed together, the hooks 33 snap around the ridges 23. Of course, in an alternative, the casings 20, 30 can bear the hooks and ridges in a reverse configuration. After assembly, the filter membrane 41 and the support grid 42 contact each other or are sufficiently close to each other, so that the filter membrane 41 is supported by the support grid 42 at rest, or at least when liquid is injected under pressure in the filter unit through the inlet 21.

On the right side of figure 4 is shown how the filter unit 1 looks after assembling the two casings 20 and 30 together, but before the over-moulding step. An interface 25 of the surfaces, with which the upper casing 20 and the lower casing 30 connect to each other, is formed around the periphery of the filter portion of the filter unit 1. Further, in the embodiment shown in figure 4, the liquid delivery portion 32, in particular the liquid outlet structure 32a, connects with the air inlet 24 of the upper casing 20. The liquid delivery portion 32 and the air inlet 24 can be respectively provided with connection means (not shown), which can be designed similar to the connection means 23 and 33 of the filter portion of the filter unit 1. However, the air inlet 24 and the liquid delivery portion 32 can also be designed without connection means, and are in this case simply connected to each other by the attachment of the upper casing 20 to the lower casing 30.

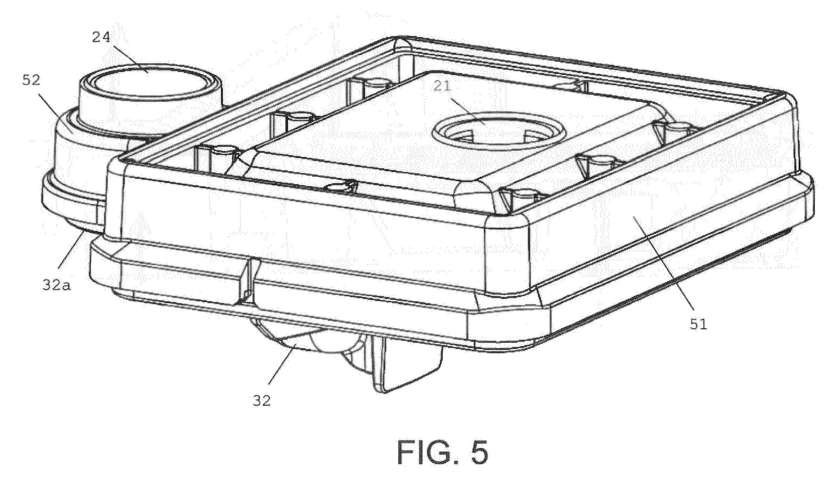

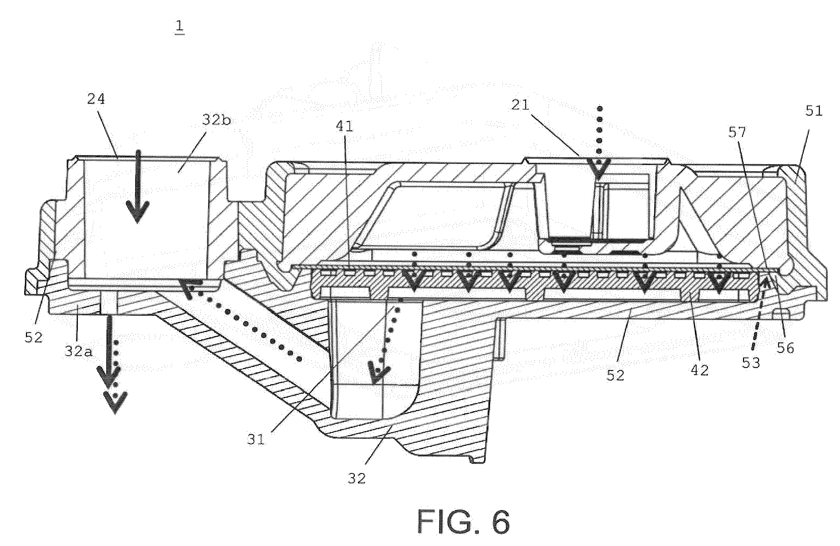

Figures 5 and 6 show the filter unit 1 after over-moulding. The over-moulded ring 50 is provided around the filter portion of the filter unit 1, in order to seal the peripheral interface 25 shown in figure 4 between the upper casing 20 and the lower casing 30. The filter membrane 41 is thereby sealed inside the filter portion of the filter unit 1, i.e. between the two casings 20 and 30. The filter membrane 41 is sealed in a way that liquid injected into the liquid inlet 21 has to flow through the filter 40, but cannot bypass the filter 40.

The over-moulded ring 50 preferably comprises two closed loops, which form an integral piece that seals both the filter portion and the liquid delivery portion 32 of the filter unit 1. Preferably, a first closed loop 51 seals the filter portion of the filter unit 1 along the peripheral interface 25. A second closed loop 52 individually seals the liquid delivery portion 32, in particular a peripheral or circumferential interface 55 between the liquid outlet structure 32a and the air inlet 24. The two closed loops 51 and 52 are integrally linked. As shown further in figure 5, the over-moulded ring 50 preferably covers at least the outer surface of the upper casing 20, more preferably even an upper surface of the upper casing 20, and reaches preferably as far down on the outer surface of the lower casing 30 so that it covers at least a part of the lower casing below the interface 25.

The over-moulded ring 50 provides impermeability for liquids injected into the filter portion of the filter unit 1 and liquid flowing through the delivery portion 32 of the filter unit 1, respectively. The tightness provided by the over-moulded ring 50 is able to withstand even liquid injected into the filter unit 1 with high pressure. The over-moulded ring 50 seals the filter portion and the delivery portion 32 to the outside. Thus, no liquid can exit at the connection of the upper casing 20 and the lower casing 30. Further, no contamination can enter from the outside into the interior of the unit. The over-moulding step for creating the over-moulded ring 50 can be integrated in a cost and time performing production line such as a line using a cube-injection technology in which the injection of the components, assembly operations includung the filter in the casings and the over-moulding of the ring, as described earlier, are performed in a cube-injection unit. As a result, the cycle times can be significantly reduced compared to conventional assembly and welding operations.

Figure 6 shows a cross-section through the filter unit 1 of the present invention. In particular, figure 6 shows how liquid is guided through the filter unit 1. The liquid is preferably injected through the liquid inlet 21. The liquid then passes the filter 40 comprising the filter membrane 41 and the support grid 42. The over-moulded ring 50, in particular the loop 51 of the over-moulded ring, preferably contacts an annular portion of the filter membrane 41 at its periphery, so that the filter membrane 41 becomes sealed to the casing and a bypass of the injected liquid is prevented. In particular, a peripheral gap is left between the upper casing 20 and lower casing 30 which is filled by the material of the over-moulded ring 50. The filled gap can form at least one continuous circumferential lip 56 of sealing material which engages with a continuous circumferential portion 57 of the filter. The contact area is represented on the lower side of the filter membrane but a contact on the upper side or on both sides is also possible.

During operation of the filter unit, after passing through the filter 40, the liquid flows out of the liquid outlet 31 of the lower casing 30, and into the liquid delivery portion 32. As can be seen in figure 6, the liquid delivery portion 32 guides the liquid into a chamber 32b that is provided side-by-side with the filter unit 1. The chamber 32b forms a sufficient room for the introduction of an external air injection means (e.g., probe) through the air inlet portion 24. The liquid outlet structure 32a and the air inlet portion 24 are sealed at their circumferential interface 55 by the loop 52 of the over-moulded ring 50.

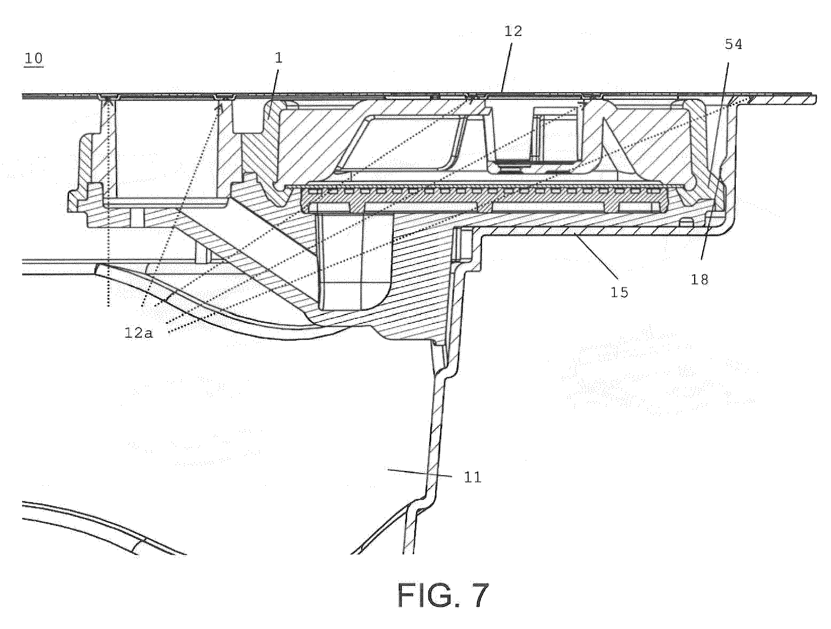

Figure 7 shows the filter unit 1 inserted into a capsule 10 according to the present invention. The capsule 10 comprises a seat 15 for receiving the filter unit 1. The seat 15 is preferably provided side-by-side with a compartment 11 of the capsule 10, which is designed for holding beverage and/or nutritional ingredients. For example, the ingredients are an infant formula in powder form. Preferably, the compartment 11 and the seat 15 holding the filter unit 1 are closed off with a single upper membrane 12 of the capsule 10. The upper membrane 12 can be welded at welding lines 12a, in particular to the seat 15 and/or to the filter unit 1. The filter unit 1 is preferably clipped into the seat 15, whereby the over-moulded ring 50 is preferably designed such that it integrally forms connection means 54 on its outer surface. These connection means 54 connect to connecting means 18 of the seat 15 of the capsule 10. Preferably, the connection means 54 on the side surface of the over-moulded ring 50 are provided in the form of at least one ridge 54, which can be pushed below a ridge 18 provided on the inner surface of the seat 15, in order to provide a snap connection.

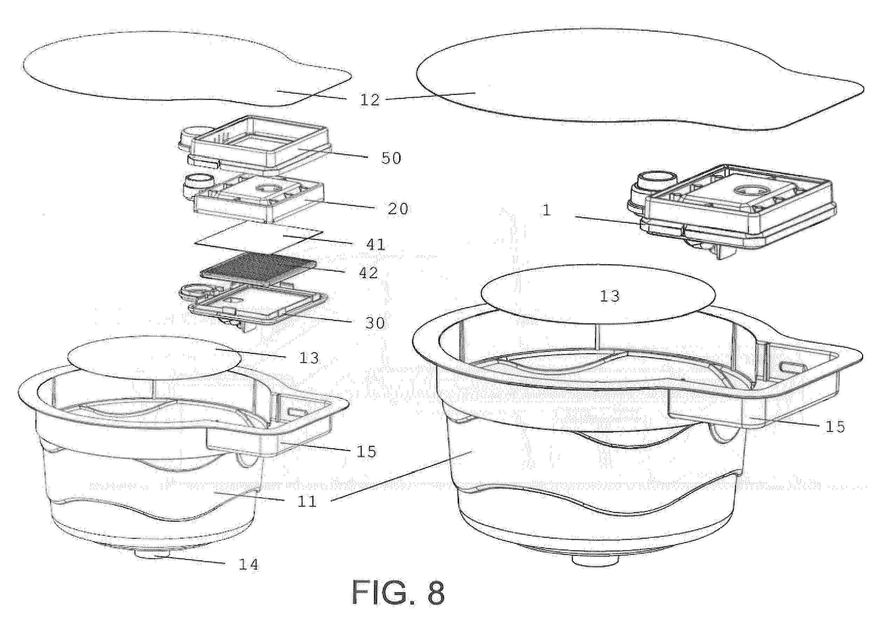

Figure 8 shows the capsule 10 and the filter unit 1 in exploded views. The seat 15 has preferably a square or rectangular shape, which matches the square or rectangular shape of the filter portion on the filter unit 1. The seat 15 is provided side-by-side with a mouth of the compartment 11 for holding the beverage and/or nutritional ingredients. When the filter unit 1 is clipped into the seat 15, the liquid delivery portion 32 is arranged such that the liquid outlet structure 32a is positioned for injecting liquid into the compartment 11 holding the ingredients. The liquid delivery portion 32 can be designed such that it forms a liquid jet for injection into the compartment 11, or that it forms a liquid spray for injection into the compartment 11. At least one liquid jet can for example be achieved by providing the outlet structure with at least one small outlet hole having preferably a diameter of 0.1 to 2 mm, more preferably 0.1 to 1 mm. Liquid spray can be achieved for example with many outlet holes, preferably of a diameter between 0.5 and 3 mm, more preferably 1 to 2 mm. The capsule 10 is closed off with a lower membrane 13 on its lower side, where the capsule 10 is also provided with a liquid outlet 14. Further, the capsule top side is closed off with the upper membrane 12, which preferably covers in one integral piece the mouth of the compartment 11 and the seat 15, which holds the filter unit 1. Both membranes 12 and 13 are preferably made of a thin metal sheet, for example aluminum. The positions of the liquid inlet 16 and air inlet 17 are apparent as defined by the welding lines 12a onto the compartment, seat and filter unit.

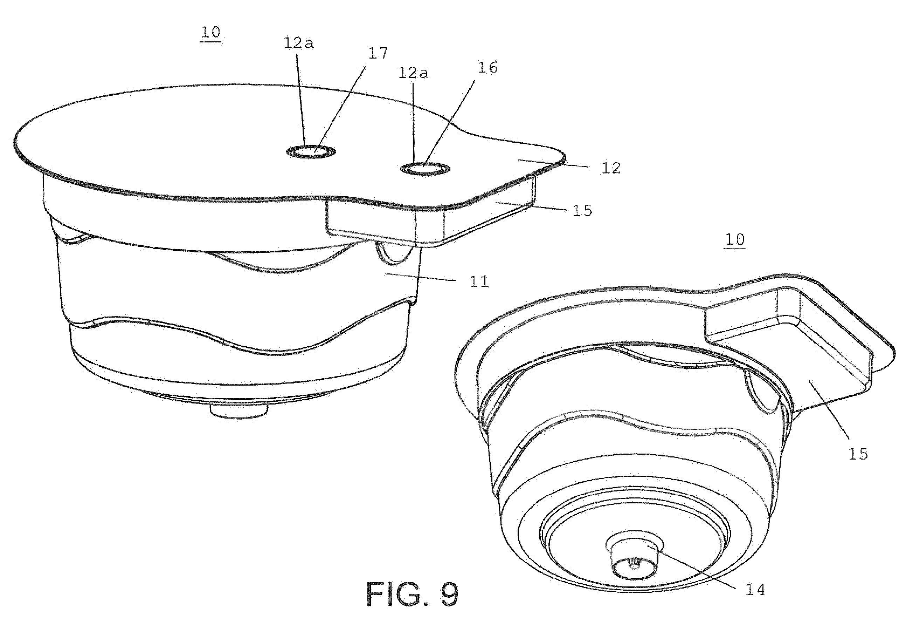

Figure 9 shows the capsule 10 in closed state. The upper membrane 12 seals the compartment and filter unit all at once. The upper membrane can be pierced by liquid injection means of a beverage preparation machine to form a liquid inlet 16 arranged right above the liquid inlet 21 of the filter unit 1. The upper membrane 12 can be pierced further by air injection means of the same beverage preparation machine at another position to form an air inlet 17, which is arranged right above the air inlet 24 of the filter unit 1. The liquid inlet 16 and the air inlet 17 can be preformed.

When liquid is injected into the capsule 10, it is filtered by the filter unit 1, and is provided as at least one liquid jet or a liquid spray to the compartment 11 of the capsule 10. Thereby, a hygienic solution is provided. Providing additionally injected air to the capsule 10 can support the formation of a liquid jet, and can ensure that the capsule 10 is emptied completely after use. The liquid delivery unit 32 of the filter unit 1 is preferably designed such that the beverage and/or nutritional ingredients in the compartment 11 are properly dissolved. Therefore, for different beverage and/or nutritional ingredients the liquid delivery portion 32 can be designed differently. For example, for some ingredients a liquid jet is optimal for dissolving the ingredients, whereas for other ingredients a liquid spray is optimal. Therefore, the liquid outlet structure 32a can be varied in its diameter or shape, or several outlet holes can compose the liquid outlet structure 32a.

The prepared beverage can leave the capsule 10 via the outlet 14. The outlet 14 can further comprise means for redirecting the beverage, or for foaming the beverage.

In summary, the present invention provides a filter unit 1 and a capsule 10 for receiving the filter unit 1. The filter unit filters a liquid that is injected into the capsule 10, before it further provides the filtered liquid to beverage ingredients housed inside the capsule 10. Therefore, the filter unit 1 is composed of an upper casing 20 and a lower casing 30, with a filter 40 disposed in between. Further, the filter unit 1 is provided with a liquid delivery portion 32 for delivering the liquid from a liquid outlet 31 of the lower casing 30 into the compartment 11 of the capsule 10. The invention ensures that injector means of a beverage preparation machine never touch the beverage ingredients inside the capsule 10. Further, the contaminants from the injected liquid can be filtered. Finally, the liquid injected into the compartment 11 can be formed, for example as liquid jet or liquid spray. Therefore, the filter unit and the capsule 10 of the present invention achieve a significant improvement over the state of the art.

## Claims

1. Filter unit (1) for a capsule (10) for preparing a beverage and/or nutritional product, the filter unit (1) comprising
an upper casing (20) comprising a liquid inlet (21);
a lower casing (30) comprising a liquid outlet (31);
a filter (40) provided between the upper casing (20) and the lower casing (30); and
a liquid delivery portion (32) for delivering a liquid received from the liquid outlet (31);
wherein an interface (25) of the upper casing (20) and the lower casing (30) is liquid-tightly sealed with an over-moulded ring (50).

2. Filter unit (1) according to claim 1, wherein at least a part of the liquid delivery portion (32) is formed integrally with the lower casing (30).

3. Filter unit (1) according to claim 1 or 2, wherein
the filter (40) comprises a filter membrane (41), and
the over-moulded ring (50) seals the filter membrane (41) to the upper casing (20) and/or lower casing (30) to prevent a bypass of liquid.

4. Filter unit (1) according to claim 3, wherein
the over-moulded ring (50) contacts a continuous annular portion of the filter membrane (41).

5. Filter unit (1) according to one of the claims 1 to 4, wherein
the filter (40) comprises a nano- or micro-porous membrane (41).

6. Filter unit (1) according to one of the claims 1 to 5, wherein
the filter (40) comprises a support grid (42) for the filter membrane (41) clipped into the lower casing (30).

7. Filter unit (1) according to one of the claims 1 to 6, wherein
the upper casing (20), the lower casing (30) and the filter (40) form a filter portion, and
the over-moulded ring (50) is an integral piece that seals both the filter portion and the liquid delivery portion (32).

8. Filter unit (1) according to claim 7, wherein
the over-moulded ring (50) forms two closed loops (51, 52) for individually sealing the filter portion and the liquid delivery portion (32), respectively, the two closed loops (51, 52) being integrally linked.

9. Filter unit (1) according to one of the claims 1 to 8, wherein
the over-moulded ring (50) covers an outer surface of the filter portion at least from an upper surface of the upper casing (20) to a part on the lower casing (30) below the interface (25).

10. Filter unit (1) according to one of the claims 1 to 9, wherein
the upper casing (20) and the lower casing (30) are provided with connection means (23, 33) for clipping the two casings (20, 30) together.

11. Filter unit (1) according to one of the claims 1 to 10, further comprising
an air inlet (24) that is separate from the liquid inlet (21) and is preferably formed integrally with the upper casing (30).

12. Filter unit (1) according to one of the claims 1 to 11, wherein
the upper casing (20) and/or the lower casing (30) have a rectangular or square seat for lodging the filter (40) having a complementary shape.

13. Capsule (10 for preparing a beverage and/or nutritional product, the capsule (10) comprising a filter unit (1) according to one of the claims 1 to 12.

14. Capsule (10) according to claim 13 comprising
a compartment (11) for beverage and/or nutritional ingredients;
a seat (15) for receiving the filter unit (1) such that the liquid delivery portion (32) is arranged for delivering a liquid into the compartment (11).

15. Manufacturing method for a filter unit (1) for a capsule for preparing a beverage and/or nutritional product, the method comprising the steps of
- assembling an upper casing (20) and a lower casing (30) with a filter (40) inserted between the casings (20, 30);
- over-moulding a sealing ring (50) to seal the interface (25) between the upper casing (20) and the lower casing (30).

## Patentansprüche

1. Filtereinheit (1) für eine Kapsel (10) zum Zubereiten eines Getränks und/oder Nahrungsmittels, wobei die Filtereinheit (1) umfasst:
ein oberes Gehäuse (20), das einen Flüssigkeitseinlass (21) umfasst;
ein unteres Gehäuse (30), das einen Flüssigkeitsauslass (31) umfasst; einen Filter (40), der zwischen dem oberen Gehäuse (20) und dem unteren Gehäuse (30) vorgesehen ist; und
einen Flüssigkeitszuführungsteil (32) zur Zufuhr einer aus dem Flüssigkeitsauslass (31) erhaltenen Flüssigkeit;
wobei eine Schnittstelle (25) des oberen Gehäuses (20) und des unteren Gehäuses (30) mit einem umspritzten Ring (50) flüssigkeitsdicht versiegelt ist.

2. Filtereinheit (1) nach Anspruch 1, wobei mindestens ein Teil des Flüssigkeitszuführungsteils (32) in einem Stück mit dem unteren Gehäuse (30) ausgebildet ist.

3. Filtereinheit (1) nach Anspruch 1 oder 2, wobei
der Filter (40) eine Filtermembran (41) umfasst und
der umspritzte Ring (50) die Filtermembran (41) am oberen Gehäuse (20) und/oder unteren Gehäuse (30) versiegelt, um zu verhindern, dass die Flüssigkeit um sie herumfließt.

4. Filtereinheit (1) nach Anspruch 3, wobei
der umspritzte Ring (50) mit einem durchgehenden Ringabschnitt der Filtermembran (41) in Kontakt steht.

5. Filtereinheit (1) nach einem der Ansprüche 1 bis 4, wobei der Filter (40) eine nano- oder mikroporöse Membran (41) umfasst.

6. Filtereinheit (1) nach einem der Ansprüche 1 bis 5, wobei
der Filter (40) ein Stützgitter (42) für die Filtermembran (41) umfasst, das in das untere Gehäuse (30) geklemmt ist.

7. Filtereinheit (1) nach einem der Ansprüche 1 bis 6, wobei
das obere Gehäuse (20), das untere Gehäuse (30) und der Filter (40) einen Filterabschnitt bilden, und
der umspritzte Ring (50) einen integralen Bestandteil darstellt, der den Filterabschnitt und den Flüssigkeitszuführungsteil (32) abdichtet.

8. Filtereinheit (1) nach Anspruch 7, wobei
der umspritzte Ring (50) zwei geschlossene Windungen (51, 52) zum getrennten Abdichten des Filterteils bzw. des Flüssigkeitszuführungsteils (32) bildet, wobei die beiden geschlossenen Windungen (51, 52) integral miteinander verbunden sind.

9. Filtereinheit (1) nach einem der Ansprüche 1 bis 8, wobei
der umspritzte Ring (50) eine Außenseite des Filterteils mindestens von einer Oberseite des oberen Gehäuses (20) bis zu einem Teil am unteren Gehäuse (30) unterhalb der Schnittstelle (25) bedeckt.

10. Filtereinheit (1) nach einem der Ansprüche 1 bis 9, wobei
das obere Gehäuse (20) und das untere Gehäuse (30) mit Verbindungsmitteln (23, 33) versehen sind, um die beiden Gehäuse (20, 30) zusammenzuklemmen.

11. Filtereinheit (1) nach einem der Ansprüche 1 bis 10, weiterhin umfassend
einen Lufteinlass (24), der getrennt vom Flüssigkeitseinlass (21) angeordnet und vorzugsweise in einem Stück mit dem oberen Gehäuse (30) ausgebildet ist.

12. Filtereinheit (1) nach einem der Ansprüche 1 bis 11, wobei
das obere Gehäuse (20) und/oder das untere Gehäuse (30) eine rechteckige oder quadratische Aufnahme zum Positionieren des Filters (40) aufweisen, der eine komplementäre Form hat.

13. Kapsel (10) zum Zubereiten eines Getränks und/oder Nahrungsmittels, wobei die Kapsel (10) eine Filtereinheit (1) nach einem der Ansprüche 1 bis 12 umfasst.

14. Kapsel (10) nach Anspruch 13, umfassend
eine Kammer (11) für Getränke- und/oder Nahrungsmittelinhaltsstoffe;
eine Aufnahme (15) zum Aufnehmen der Filtereinheit (1) in der Weise, dass der Flüssigkeitszuführungsteil (32) für die Zufuhr einer Flüssigkeit in die Kammer (11) angeordnet ist.

15. Fertigungsverfahren für eine Filtereinheit (1) für eine Kapsel zum Zubereiten eines Getränks und/oder Nahrungsmittels, wobei das Verfahren folgende Schritte umfasst:
- Zusammenbauen eines oberen Gehäuses (20) und eines unteren Gehäuses (30) mit einem zwischen den Gehäusen (20, 30) eingesetzten Filter (40);
- Umspritzen eines Dichtrings (50) zum Versiegeln der Schnittstelle (25) zwischen dem oberen Gehäuse (20) und dem unteren Gehäuse (30).

## Revendications

1. Unité de filtre (1) destinée à une capsule (10) pour la préparation d'un produit de boisson et/ou nutritionnel, l'unité de filtre (1) comprenant
un boîtier supérieur (20) comprenant une entrée de liquide (21) ;
un boîtier inférieur (30) comprenant une sortie de liquide (31) ;
un filtre (40) fourni entre le boîtier supérieur (20) et le boîtier inférieur (30) ; et
une partie de distribution de liquide (32) pour distribuer un liquide reçu de la sortie de liquide (31) ;
dans laquelle une interface (25) du boîtier supérieur (20) et du boîtier inférieur (30) est scellée de façon étanche aux liquides avec une bague surmoulée (50).

2. Unité de filtre (1) selon la revendication 1, dans laquelle au moins une partie de la partie de distribution de liquide (32) est formée de façon solidaire avec le boîtier inférieur (30).

3. Unité de filtre (1) selon la revendication 1 ou 2, dans laquelle
le filtre (40) comprend une membrane filtrante (41), et
la bague surmoulée (50) scelle la membrane filtrante (41) au boîtier supérieur (20) et/ou au boîtier inférieur (30) pour empêcher un contournement de liquide.

4. Unité de filtre (1) selon la revendication 3, dans laquelle
la bague surmoulée (50) vient en contact avec une partie annulaire continue de la membrane filtrante (41).

5. Unité de filtre (1) selon l'une des revendications 1 à 4, dans laquelle
le filtre (40) comprend une membrane nano- ou micro-poreuse (41).

6. Unité de filtre (1) selon l'une des revendications 1 à 5, dans laquelle
le filtre (40) comprend une grille de support (42) pour la membrane filtrante (41) attachée dans le boîtier inférieur (30).

7. Unité de filtre (1) selon l'une des revendications 1 à 6, dans laquelle
le boîtier supérieur (20), le boîtier inférieur (30) et le filtre (40) forment une partie de filtre, et
la bague surmoulée (50) est une pièce d'un seul tenant qui scelle à la fois la partie de filtre et la partie de distribution de liquide (32).

8. Unité de filtre (1) selon la revendication 7, dans laquelle
la bague surmoulée (50) forme deux boucles fermées (51, 52) permettant de sceller individuellement la partie de filtre et la partie de distribution de liquide (32), respectivement, les deux boucles fermées (51, 52) étant reliées de façon solidaire.

9. Unité de filtre (1) selon l'une des revendications 1 à 8, dans laquelle
la bague surmoulée (50) couvre une surface externe de la partie de filtre au moins à partir d'une surface supérieure du boîtier supérieur (20) jusqu'à une partie sur le boîtier inférieur (30) en dessous de l'interface (25).

10. Unité de filtre (1) selon l'une des revendications 1 à 9, dans laquelle
le boîtier supérieur (20) et le boîtier inférieur (30) sont pourvus d'un moyen de raccordement (23, 33) pour attacher les deux boîtiers (20, 30) l'un à l'autre.

11. Unité de filtre (1) selon l'une des revendications 1 à 10, comprenant en outre
une entrée d'air (24) qui est séparée de l'entrée de liquide (21) et est, de préférence, formée de manière solidaire avec le boîtier supérieur (30).

12. Unité de filtre (1) selon l'une des revendications 1 à 11, dans laquelle
le boîtier supérieur (20) et/ou le boîtier inférieur (30) ont un logement rectangulaire ou carré pour loger le filtre (40) possédant une forme complémentaire.

13. Capsule (10 pour la préparation d'un produit de boisson et/ou nutritionnel, la capsule (10) comprenant une unité de filtre (1) selon l'une des revendications 1 à 12.

14. Capsule (10) selon la revendication 13, comprenant
un compartiment (11) pour des ingrédients de boisson et/ou nutritionnels ;
un logement (15) destiné à recevoir l'unité de filtre (1) de telle sorte que la partie de distribution de liquide (32) est disposée pour distribuer un liquide dans le compartiment (11).

15. Procédé de fabrication pour une unité de filtre (1) destiné à une capsule pour la préparation d'un produit de boisson et/ou nutritionnel, le procédé comprenant les étapes consistant à
- assembler un boîtier supérieur (20) et un boîtier inférieur (30) avec un filtre (40) inséré entre les boîtiers (20, 30) ;
- surmouler une bague d'étanchéité (50) pour sceller l'interface (25) entre le boîtier supérieur (20) et le boîtier inférieur (30).
